# EUROPEAN PATENT APPLICATION

(11) **EP 3 885 772 A1**
(43) Date of publication of application: **29.09.2021**
(21) Application number: 20166347.3
(22) Date of filing: 27.03.2020
(51) Int. Cl.: G01N 35/04, B65G 47/82, B65G 47/88

(54) **APPARATUS FOR HANDLING LABORATORY SAMPLE CONTAINER RACKS AND LABORATORY SAMPLE DISTRIBUTION SYSTEM**

(71) Applicant: F. Hoffmann-La Roche AG, 4070 Basel (CH); Roche Diagnostics GmbH, 68305 Mannheim (DE)
(72) Inventor: Söntges, Stefan, 70197 Stuttgart (DE)
(74) Representative: Patentanwälte Ruff, Wilhelm, Beier, Dauster & Partner mbB

(57) **Abstract**

Apparatus (100) for handling laboratory sample container racks (200), wherein the laboratory sample container racks (200) are provided to the apparatus (100) on a belt drive (300) in a x-direction, the apparatus (100) comprising:
- a drive (1, 2, 3),
- a slide (4),
- a pusher (5), wherein the drive (1, 2, 3) is adapted to move the pusher (5) in a y-direction, the y-direction being perpendicular to the x-direction, and
- at least one pin (6), wherein the at least one pin (6) is attached to the pusher (5),
- wherein in a first y-position of the pusher (5), the pusher (5) and the slide (4) are positioned relative to one another such that a laboratory sample container rack (200) provided on the belt drive (300) slides along the slide (4) in the x-direction and is not in contact with the pusher (5) and the at least one pin (6),
- wherein in a second y-position of the pusher (5), the pusher (5) and the slide (4) are positioned relative to one another such that the at least one pin (6) may penetrate a corresponding opening (201) of the laboratory sample container rack (200) provided on the belt drive (300), such that the laboratory sample container rack (200) is mechanically fixed in a z-direction, being perpendicular to the x-direction and the y-direction.

## Description

The invention refers to an apparatus for handling laboratory sample container racks and to a laboratory sample distribution system.

It is the object of the invention to provide for an apparatus for handling laboratory sample container racks and to provide for a laboratory sample distribution system being efficient, operating secure and being easy to manufacture.

The apparatus is adapted to handle laboratory sample container racks. The laboratory sample container racks typically have a number of openings being adapted to receive laboratory sample containers, typically in form of sample tubes. The laboratory sample container racks may e.g. have five linearly arranged openings.

The laboratory sample container racks are provided to the apparatus on a belt drive in a horizontal x-direction. The laboratory sample container racks may e.g. be placed on top of a belt of the belt drive and may be conveyed in the direction of the moving belt. Reference insofar may also be made to the relevant technical literature.

The apparatus comprises a drive e.g. comprising an electric motor.

The apparatus further comprises a slide.

The apparatus further comprises a pusher.

The drive is adapted to move the pusher in a horizontal y-direction back and forth, the y-direction being perpendicular to the x-direction.

The apparatus further comprises at least one pin, in particular two pins, wherein the at least one pin is fixedly attached to the pusher, such that the pusher and the at least one pin move together in y-direction.

In a first y-position of the pusher, the pusher and the slide are positioned relative to one another such that a laboratory sample container rack provided on the belt drive slides freely along the slide in the x-direction and is not in contact with the pusher and the at least one pin. When the pusher is in the first position the laboratory sample container rack is provided to the apparatus to be handled.

In a second y-position of the pusher, the pusher and the slide are positioned relative to one another such that the at least one pin may penetrate or penetrates a corresponding opening of the laboratory sample container rack provided on the belt drive, such that the laboratory sample container rack is mechanically fixed in a z-direction, being perpendicular to the x-direction and the y-direction. When the laboratory sample container rack is mechanically fixed in the z-direction, laboratory sample containers arranged in the laboratory sample container rack may e.g. be removed from the laboratory sample container rack by means of a gripper applying a removing force to the laboratory sample container in z-direction.

The pusher may define or form a plane extending in x-direction and being perpendicular to the y-direction.

The workflow provided is as follows. A laboratory sample container rack to be handled is provided to the apparatus on the belt of the belt drive in the x-direction. As soon as the laboratory sample container rack has reached its handling position before the apparatus, the drive moves the pusher to the second y-position, such that the at least one pin penetrates the corresponding opening of the laboratory sample container rack provided on the belt drive. Thus, the laboratory sample container rack is mechanically fixed in z-direction. Then, laboratory sample containers arranged in the laboratory sample container rack are removed from the laboratory sample container rack in z-direction, e.g. by means of a pick-and-place device.

According to an embodiment, the drive is adapted to move the pusher to a third y-position, such that the laboratory sample container rack, which has been emptied from laboratory sample containers in the second y-position of the pusher, is pushed from the belt drive onto a rack tray.

According to an embodiment, the drive comprises an electric motor, e.g. a DC motor, a pinion and a gear rack mechanically fixed to the pusher, wherein the electric motor is adapted to rotate the pinion clockwise or counter-clock wise, wherein the rotating pinion interacts with the gear rack such that the gear rack and the pusher move in the y-direction.

According to an embodiment, the apparatus further comprises a sensor being adapted to detect a laboratory sample container rack placed at a handling position. The handling position is a position in which the at least one pin is aligned in x-direction with the corresponding opening of the laboratory sample container rack, such that the at least one pin may penetrate the corresponding opening of the laboratory sample container rack when the pusher moves to its second y-direction.

According to an embodiment, the sensor is an optical sensor, e.g. a light sensor.

According to an embodiment, the apparatus further comprises a rod extending in the y-direction being adapted to guide the movement of the pusher in the y-direction.

According to an embodiment, the apparatus further comprises a distance measuring unit being adapted to measure a y-position of the pusher. By means of the distance measuring unit it is possible to repeatedly drive the pusher in the first, second and third y-position.

According to an embodiment, the apparatus further comprises an assembly portion, wherein the slide is mechanically fixed non-portable with respect to the assembly portion. The pusher is movable in y-direction with respect to the assembly portion.

According to an embodiment, the pusher has an opening, wherein in the first y-position of the pusher the slide protrudes through the opening. In the second and third y-position of the pusher the slide does not protrude through the opening.

The laboratory sample distribution system comprises a belt drive for moving laboratory sample container racks in a x-direction, i.e. the direction of motion of a belt of the belt drive, and an apparatus as described above arranged adjacent to the belt drive.

According to an embodiment, the laboratory sample distribution system further comprises a rack tray arranged adjacent to the belt drive, in particular on an opposite side of the belt with regard to the apparatus, being adapted to collect laboratory sample container racks pushed from the belt drive onto rack tray by means of the apparatus.

According to an embodiment, the laboratory sample distribution system further comprises a mounting plate, wherein the assembly portion of the apparatus is mechanically fixed to the mounting plate, e.g. by means of screws.

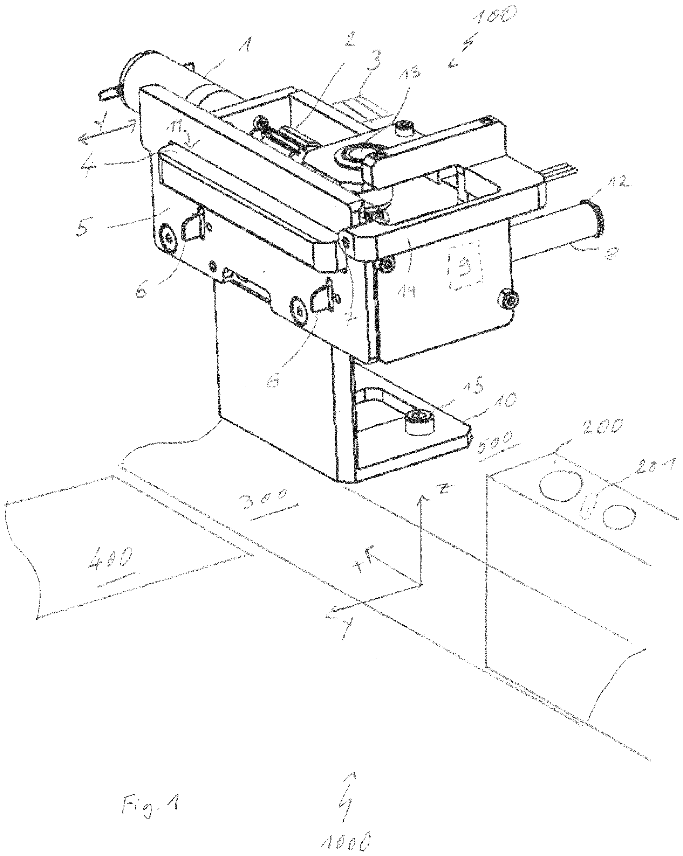

The invention will now be described with respect to the drawing, wherein
- Fig. 1: shows a laboratory sample distribution system.

Fig. 1 shows a laboratory sample distribution system 1000 comprising a belt drive 300 for moving laboratory sample container racks 200 in a x-direction, an apparatus 100 for handling the laboratory sample container racks 200 arranged adjacent to the belt drive 300 and a rack tray 400 arranged adjacent to the belt drive 300 being adapted to collect laboratory sample container racks 200 pushed from the belt drive 300 onto the rack tray 400 by means of the apparatus 100.

The apparatus 100 for handling laboratory sample container racks 200 handles laboratory sample container racks 200 provided to the apparatus 100 on the belt drive 300 in an x-direction.

An assembly portion 10 of the apparatus 100 is mechanically fixed to a mounting plate 500 of the laboratory sample distribution system 1000.

The apparatus 100 comprises a drive comprising an electric motor 1, a pinion 2 and a gear rack 3 mechanically fixed to a pusher 5 of the apparatus, wherein the electric motor 1 is adapted to rotate the pinion 2, wherein the rotating pinion 2 interacts with the gear rack 3 such that the gear rack 3 and the pusher 5 move together in y-direction, the y-direction being perpendicular to the x-direction.

The apparatus 100 further comprises a slide 4 protruding through an opening 11 of the pusher 5, if the pusher 5 is in a first y-position, as depicted in Fig. 1.

The apparatus 100 further comprises two pins 6, wherein the pins 6 are attached to the pusher 5 at a side of the pusher 5 being directed to the belt drive 300.

The apparatus 100 further comprises a rod 8 extending in the y-direction being adapted to guide the movement of the pusher 5 in the y-direction.

As depicted in Fig. 1, in the first y-position of the pusher 5, the pusher 5 and the slide 4 are positioned relative to one another such that a laboratory sample container rack 200 provided on the belt drive 300 slides along the slide 4 in the x-direction and is not in contact with the pusher 5 and the pins 6.

The apparatus 100 further comprises a sensor 7 being adapted to detect a laboratory sample container rack 200 placed at an intended handling position in front of the apparatus 100.

The movement of the laboratory sample container rack 200 may be stopped by stopping the belt drive 300 as soon as the laboratory sample container rack 200 is placed at the intended handling position. Additionally or alternatively, a physical stop may be provided in the path of belt drive 300. The stop may be positioned such that handling position is correctly reached.

When the laboratory sample container rack 200 is placed at the intended handling position, the drive 1, 2, 3 moves the pusher 5 to a second y-position in the direction of the belt drive 300.

In the second y-position, the pusher 5 and the slide 4 are positioned relative to one another such that the pins 6 penetrate through corresponding openings 201 (only one opening 201 depicted) of the laboratory sample container rack 200 provided on the belt drive 300 at the handling position, such that the laboratory sample container rack 200 is mechanically fixed in a z-direction, being perpendicular to the x-direction and the y-direction. In other words, the pusher 5 moves in y-direction towards the laboratory sample container rack 200, wherein the slide 4 remains stationary.

In the second y-position of the pusher 5, laboratory sample containers or tubes (not shown) stored in the laboratory sample container rack 200 are unloaded from the laboratory sample container rack 200 by means of a gripper (not shown).

As soon as all laboratory sample containers are unloaded from the laboratory sample container rack 200, the drive 1, 2, 3 moves the pusher 5 to a third y-position, such that the laboratory sample container rack 200 is pushed from the belt drive 300 onto the rack tray 400.

The apparatus 100 further comprises a distance measuring unit 9 being adapted to measure a y-position of the pusher 5. The measured y-position may be used to reliably drive the pusher to the desired y-positions.

The laboratory sample distribution system 1000 may comprise a movable stop having two functional positions. In a first position, the stop may prevent a movement of the laboratory sample container rack 200 placed at the handling position in y-direction during the movement of the pusher 5 in the direction of the laboratory sample container rack 200. In a second position, the stop may enable a movement of the laboratory sample container rack 200 in y-direction.

The apparatus may be made of semi-finished aluminum.

The pusher 5 is driven by the gear rack 3, the DC motor 1 and the pinion 2. The gear rack 3 and the rod 8 having an end stop 12 also guide the pusher 5. The rod 8 and the gear rack 3 may be mounted in plastic bushings (not shown).

The three y-positions may be teached in by means of a teach button 13 and the distance measuring unit 9.

The slide 4 protrudes forward through the opening 11 of the pusher 5 to support the laboratory sample container rack 200 retracted for unloading. This slide 4 is fixed. At an upper end of the pusher 5 the sensor 7 is mechanically fixed in flush with the pusher 5 at the front of a holder 14. The sensor signals, when the sample container rack 200 is retracted and has reached the correct or handling position.

Then the pusher 5 moves from its first y-position into its second y- or working position. The two pins or lugs 6 dip into the openings 201 of the laboratory sample container rack 200 and hold it down. The pins or lugs 6 may be made of metal and may be screwed positively to the pusher 5. Then the laboratory sample container rack 200 can be unloaded.

Once the unloading process is complete, the pusher 5 moves from its second y-position to its third y-position and thereby pushes the empty laboratory sample container rack 200 onto the provided rack tray 400. Then the pusher 5 moves back into its first y-position.

The apparatus 100 is mechanically coupled to the mounting plate 500 by means of screws 15.

## Claims

1. Apparatus (100) for handling laboratory sample container racks (200), wherein the laboratory sample container racks (200) are provided to the apparatus (100) on a belt drive (300) in a x-direction, the apparatus (100) comprising:
- a drive (1, 2, 3),
- a slide (4),
- a pusher (5), wherein the drive (1, 2, 3) is adapted to move the pusher (5) in a y-direction, the y-direction being perpendicular to the x-direction, and
- at least one pin (6), wherein the at least one pin (6) is attached to the pusher (5),
- wherein in a first y-position of the pusher (5), the pusher (5) and the slide (4) are positioned relative to one another such that a laboratory sample container rack (200) provided on the belt drive (300) slides along the slide (4) in the x-direction and is not in contact with the pusher (5) and the at least one pin (6),
- wherein in a second y-position of the pusher (5), the pusher (5) and the slide (4) are positioned relative to one another such that the at least one pin (6) may penetrate a corresponding opening (201) of the laboratory sample container rack (200) provided on the belt drive (300), such that the laboratory sample container rack (200) is mechanically fixed in a z-direction, being perpendicular to the x-direction and the y-direction.

2. Apparatus according to claim 1, **characterized in that**
- the drive (1, 2, 3) is adapted to move the pusher (5) to a third y-position, such that the laboratory sample container rack (200) is pushed from the belt drive (300) onto a rack tray (400).

3. Apparatus according to claim 1 or 2, **characterized in that**
- the drive (1, 2, 3) comprises an electric motor (1), a pinion (2) and a gear rack (3) mechanically fixed to the pusher (5), wherein the electric motor (1) is adapted to rotate the pinion (2), wherein the rotating pinion (2) interacts with the gear rack (3) such that the gear rack (3) and the pusher (5) move in the y-direction.

4. Apparatus according to one of the preceding claims, **characterized in that**
- the apparatus further comprises a sensor (7) being adapted to detect a laboratory sample container rack (200) placed at a handling position.

5. Apparatus according to claim 4, **characterized in that**
- the sensor (7) is an optical sensor.

6. Apparatus according to one of the preceding claims, **characterized in that**
- the apparatus further comprises a rod (8) extending in the y-direction being adapted to guide the movement of the pusher (5) in the y-direction.

7. Apparatus according to one of the preceding claims, **characterized in that**
- the apparatus further comprises a distance measuring unit (9) being adapted to measure a y-position of the pusher (5).

8. Apparatus according to one of the preceding claims, **characterized in that**
- the apparatus further comprises an assembly portion (10), wherein the slide (4) is mechanically fixed non-portable with respect to the assembly portion (10).

9. Apparatus according to one of the preceding claims, **characterized in that**
- the pusher (5) has an opening (11), wherein in the first y-position of the pusher (5) the slide (4) protrudes through the opening (11).

10. Laboratory sample distribution system (1000), comprising
- a belt drive (300) for moving laboratory sample container racks (200) in a x-direction,
- an apparatus (100) according to one of the preceding claims arranged adjacent to the belt drive (300).

11. Laboratory sample distribution system (1000) according to claim 10, further comprising
- a rack tray (400) arranged adjacent to the belt drive (300) being adapted to collect laboratory sample container racks (200) pushed from the belt drive (300) onto rack tray (400) by means of the apparatus (100).

12. Laboratory sample distribution system (1000) according to claim 10 or 11, further comprising
- a mounting plate (500), wherein the assembly portion (10) is mechanically fixed to the mounting plate (500).
